# EUROPEAN PATENT APPLICATION

(11) **EP 3 118 170 A1**
(43) Date of publication of application: **18.01.2017**
(21) Application number: 15761572.5
(22) Date of filing: 16.03.2015
(51) Int. Cl.: C03B 33/04, B28D 5/00

(54) **GLASS PLATE PROCESSING METHOD AND PROCESSING DEVICE**

(30) Priority: 14.03.2014 JP 2014052815
(71) Applicant: Bando Kiko Co., Ltd, Tokushima-shi, Tokushima 770-0871 (JP)
(72) Inventor: FUNAKI, Akira, Tokushima-shi Tokushima 770-0871 (JP); SHIMAMURA, Munekazu, Tokushima-shi Tokushima 770-0871 (JP)
(74) Representative: Jackson, Martin Peter
(86) International application number: PCT/JP2015/001453
(87) International publication number: WO 2015/136946

(57) **Abstract**

In a glass plate working apparatus 1, a carrying-in position 3, a scribing position 4, a removing position 5, a grinding position 6, and a discharging position 7 are arranged at equal intervals linearly along a transporting direction, and a transporting device 8 for transporting glass plates 2 is additionally provided.

## Description

### TECHNICAL FIELD

The present invention relates to a glass plate working method and working apparatus for forming an opening (hole) in a glass plate.

### BACKGROUND ART

Patent Document 1 describes a method in which the formation of an opening in a glass plate for an automobile is performed by cutting out using a pressurized water jet.

Patent Document 2 describes a method wherein a cutter wheel whose left and right edge angles are different with respect to a wheel ridgeline is moved in a state in which the wheel ridgeline is set uprightly with respect to the glass plate surface, or a cutter wheel whose left and right edge angles are identical with respect to the wheel ridgeline is moved in a state in which the wheel ridgeline is inclined with respect to the glass plate surface, so as to form a scribe groove which is inclined with respect to the thickness direction of the glass plate, and a method wherein a scribe groove which is inclined with respect to the thickness direction of the glass plate is formed, and the glass plate surface is subsequently heated to deform the glass plate and cause the scribe groove to proceed, to thereby cut out from the glass plate a glass substrate for a magnetic disk or an optical disk.

### PRIOR ART DOCUMENTS

### PATENT DOCUMENTS

Patent Document 1: JP-T-2012-519642
Patent Document 2: JP-A-7-223828

### SUMMARY OF THE INVENTION

### PROBLEMS THAT THE INVENTION IS TO SOLVE

Incidentally, in the method described in Patent Document 1 in which the formation of an opening in the glass plate is effected by cutting-out forming using a pressurized water jet, the cutting speed of the glass plate is slow, and a long time is required until the completion of the cutting out, so that the working operation is very low in efficiency.

In addition, in the cutting method described in Patent Document 2, since the glass plate surface is heated, much time is required in the separation of the opening of the glass plate in the same way as the manufacturing method described in Patent Document 1, and the efficiency is also very poor.

An object of the present invention is to provide a glass plate working method and working apparatus which are capable of forming an opening in a glass plate speedily and with good quality.

Another object of the present invention is to provide a glass plate working method and working apparatus which are capable of continuously manufacturing glass plates with an opening formed therein.

### MEANS FOR SOLVING THE PROBLEMS

A glass plate working method in accordance with the present invention comprises the steps of: forming on one surface of a glass plate a scribe groove (a scribe line or cut line) constituted by a closed curve with a cutter wheel, the scribe groove being directed in a thickness direction of the glass plate in such a manner as to be inclined toward an inner region of the closed curve; and lifting an inner region of the glass plate inside the closed curve from another surface of the glass plate in a state in which an outer region of the glass plate outside the closed curve is pressed from one surface of the glass plate with the scribe groove formed thereon, to bend the glass plate in a convex shape toward a side of the one surface so as to cause the scribe groove to proceed toward the other surface facing to the one surface of the glass plate, and removing the inner region of the glass plate inside the closed curve from the outer region of the glass plate outside the closed curve.

A glass plate working apparatus in accordance with the present invention comprises: a scribing position for forming on one surface of a glass plate a scribe groove constituted by a closed curve with a cutter wheel, the scribe groove being directed in a thickness direction of the glass plate in such a manner as to be inclined toward an inner region of the closed curve; and a removing position for lifting an inner region of the glass plate inside the closed curve from another surface of the glass plate in a state in which an outer region of the glass plate outside the closed curve is pressed from one surface of the glass plate with the scribe groove formed thereon, to bend the glass plate in a convex shape toward a side of the one surface so as to cause the scribe groove to proceed toward the other surface facing to the one surface of the glass plate, and removing the inner region of the glass plate inside the closed curve from the outer region of the glass plate outside the closed curve.

In the present invention, the scribe groove may be caused to reach the other surface by allowing the scribe groove to proceed by bending the glass plate in a convex shape, and after the other surface has been reached, the glass plate may be removed. In addition, the lifting of the glass plate may be effected by NC control.

Furthermore, in the present invention, an arrangement may be provided such that the cutter wheel is rollingly moved on the one surface of the glass plate by applying pressure to the cutter wheel to scribe form with the cutter wheel a scribe groove inclined with respect to the thickness direction of the glass plate in the one surface of the glass plate, and the region surrounded by the scribe groove, i.e., the inner region of the glass plate inside the closed curve, is removed from the region outside the scribe groove, i.e., outer region of the glass plate outside the closed curve, from the side of the one surface of the glass plate with the scribe groove scribe formed thereon.

In the present invention, the glass plate may be a windshield (panoramic roof glass plate) serving as both a windshield and a ceiling in an automobile or side glass of an automobile. According to the present invention, it is possible to satisfactorily cut out and form an opening for a sunroof window in a ceiling region of the windshield or an opening in a glass plate for side glass. Furthermore, it is possible to satisfactorily form an opening in a glass plate in general, and work and manufacture a glass plate with an opening for cooking.

### ADVANTAGES OF THE INVENTION

According to the present invention, it is possible to provide a glass plate working method and working apparatus which are capable of forming an opening in a glass plate speedily and with good quality.

In addition, according to the present invention, it is possible to provide a glass plate working method and working apparatus which are capable of continuously manufacturing glass plates with an opening formed therein.

### BRIEF DESCRIPTION OF THE DRAWINGS

Fig. 1 is an explanatory plan view of a glass plate (product) with an opening formed therein;
Fig. 2 is an explanatory plan view of a glass plate with a scribe groove for the formation of an opening formed therein;
Fig. 3 is an explanatory view of the posture of a cutter wheel during scribing using a cutter wheel whose left and right edge angles are identical;
Fig. 4 is an explanatory view of the posture of a cutter wheel during scribing using a cutter wheel whose left and right edge angles are different;
Fig. 5 is an explanatory cross-sectional view of the glass plate with the scribe groove formed thereon in such a manner as to be inclined toward an inner region of a closed curve;
Fig. 6 is a view for explaining the operation of removing an inner region of the closed curve of the scribe groove;
Fig. 7 is a view for explaining the operation of removing the inner region of the closed curve of the scribe groove;
Fig. 8 is an explanatory front elevational view of a preferred illustrative embodiment of a glass plate working apparatus in accordance with the present invention;
Fig. 9 is an explanatory fragmentary front cross-sectional view of the illustrative embodiment shown in Fig. 8;
Fig. 10 is an explanatory transverse cross-sectional view of a scribing position in a case where a cutter wheel whose left and right edge angles are identical with respect to an ridgeline is used;
Fig. 11 is an explanatory transverse cross-sectional view of the scribing operation in the scribing position shown in Fig. 10;
Fig. 12 is an explanatory transverse cross-sectional view of a removing position;
Fig. 13 is an explanatory transverse cross-sectional view of the removing position;
Fig. 14 is an explanatory transverse cross-sectional view of the removing position;
Fig. 15 is an explanatory transverse cross-sectional view of the removing position;
Fig. 16 is an explanatory transverse cross-sectional view of the grinding operation in the grinding position;
Fig. 17 is an explanatory transverse cross-sectional view of the scribing position in a case where a cutter wheel whose left and right edge angles are different with respect to the ridgeline is used; and
Fig. 18 is an explanatory plan view of the removing position.

### MODE FOR CARRYING OUT THE INVENTION

A description will be given of a preferred illustrative embodiment of the present invention with reference to the drawings. The present invention is not limited to the illustrative embodiment.

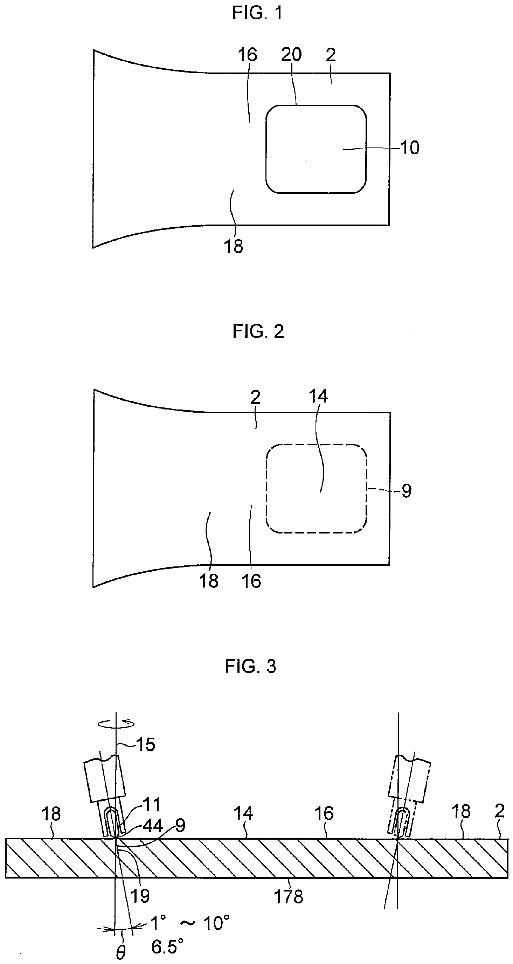

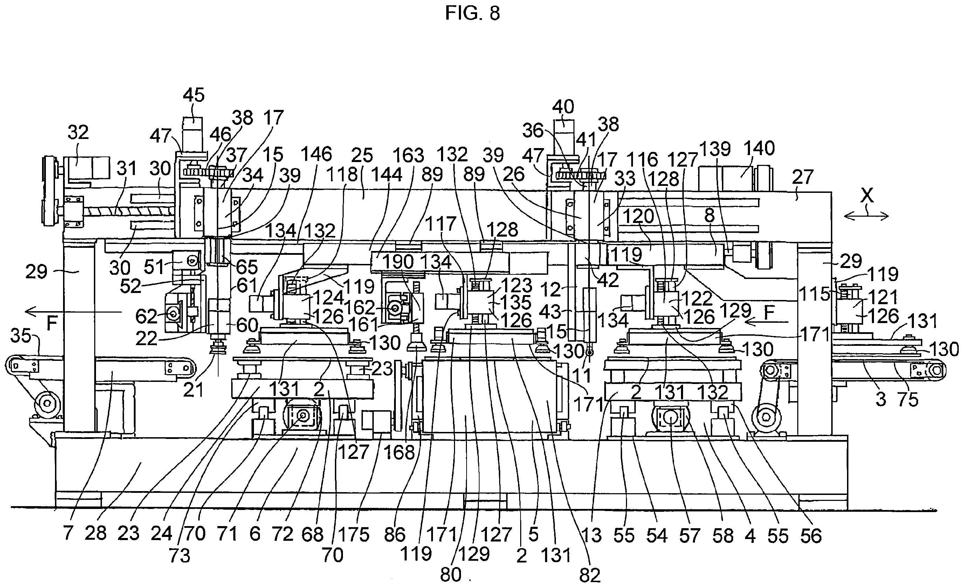

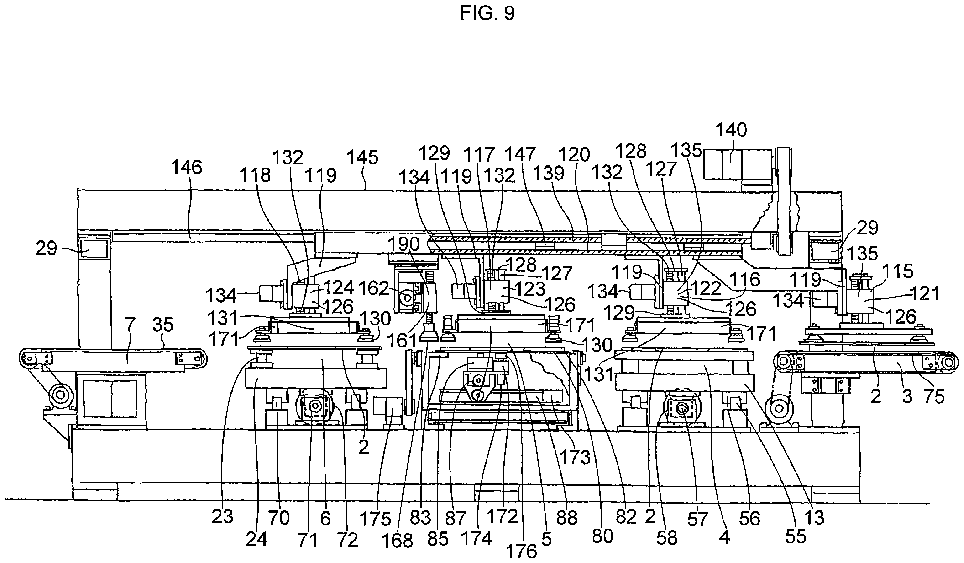

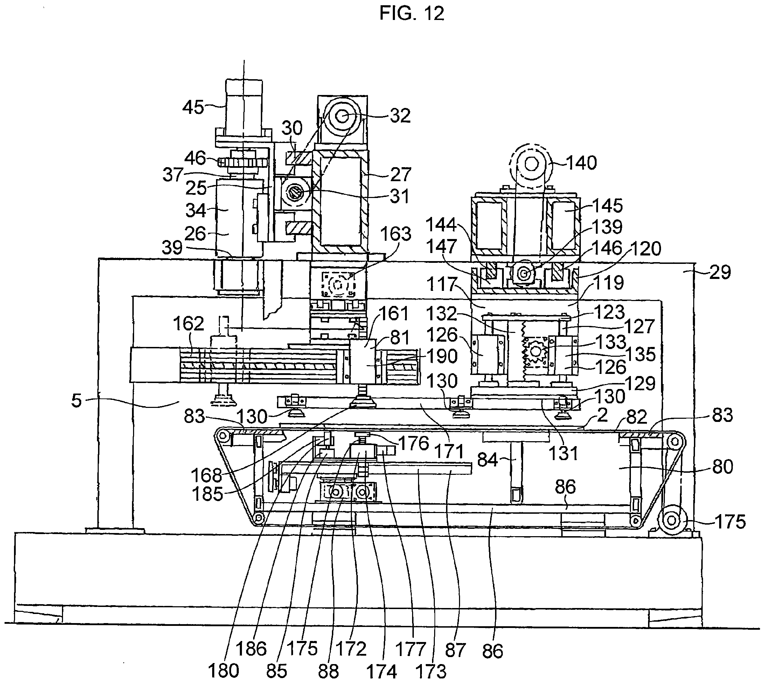

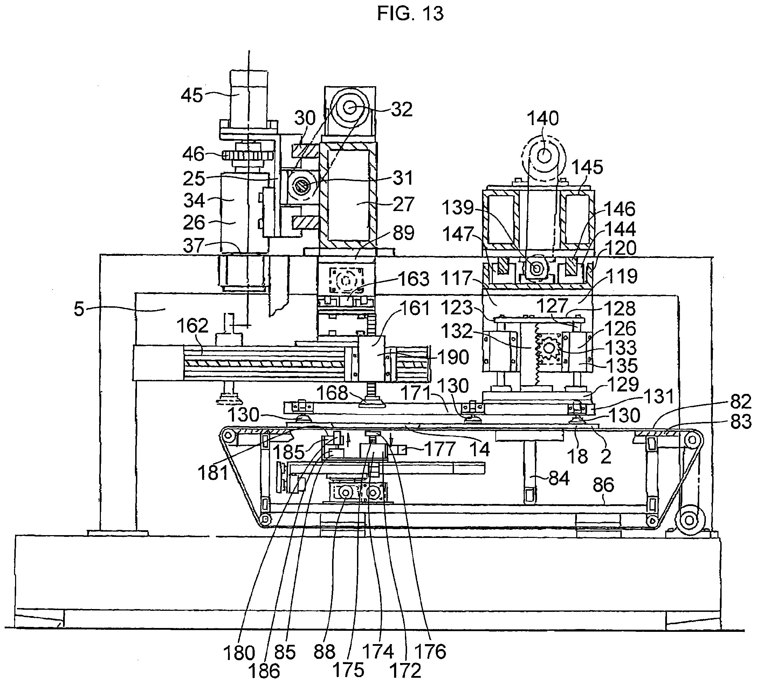

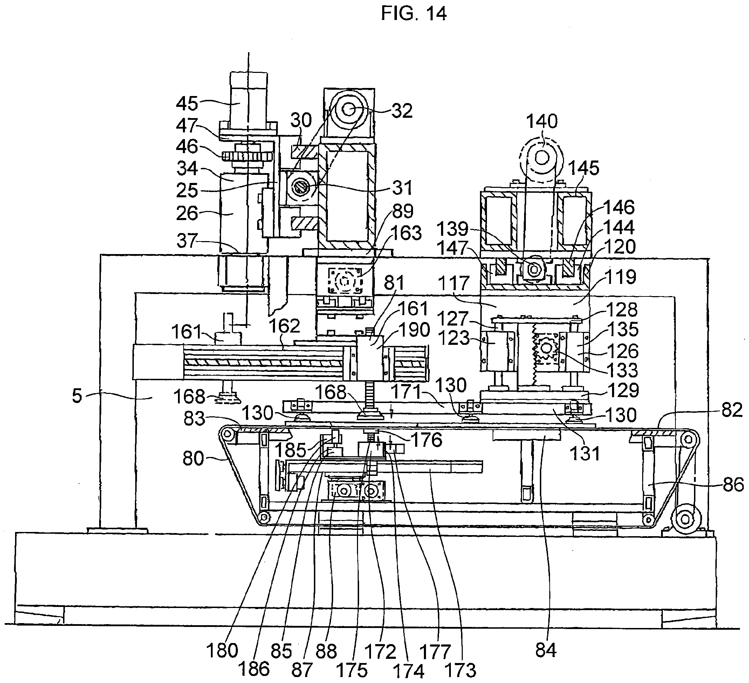

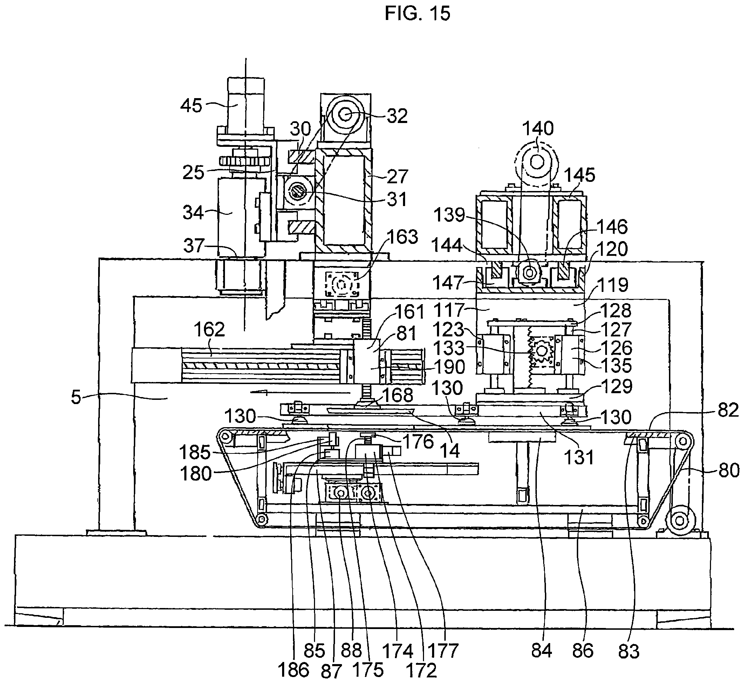

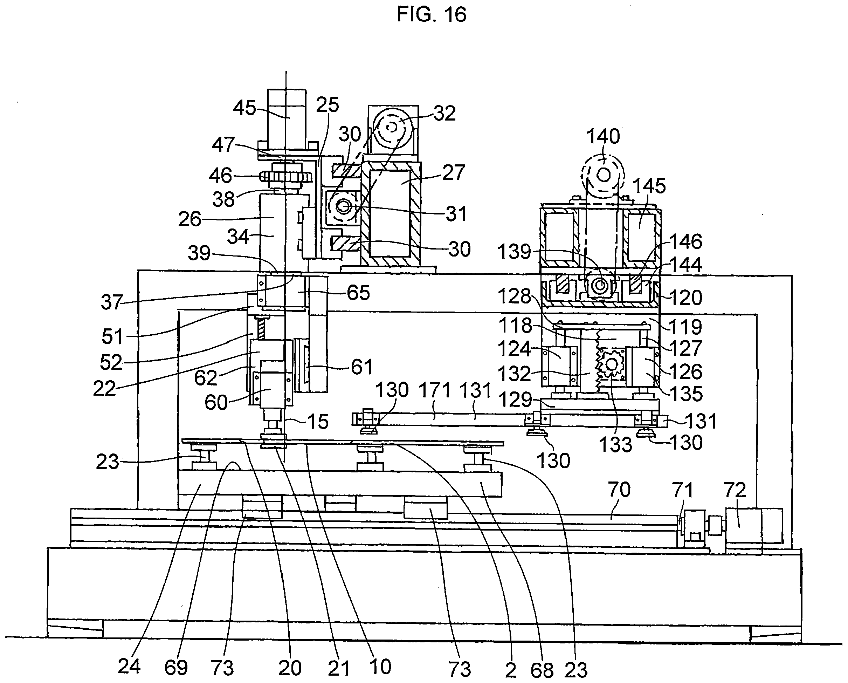

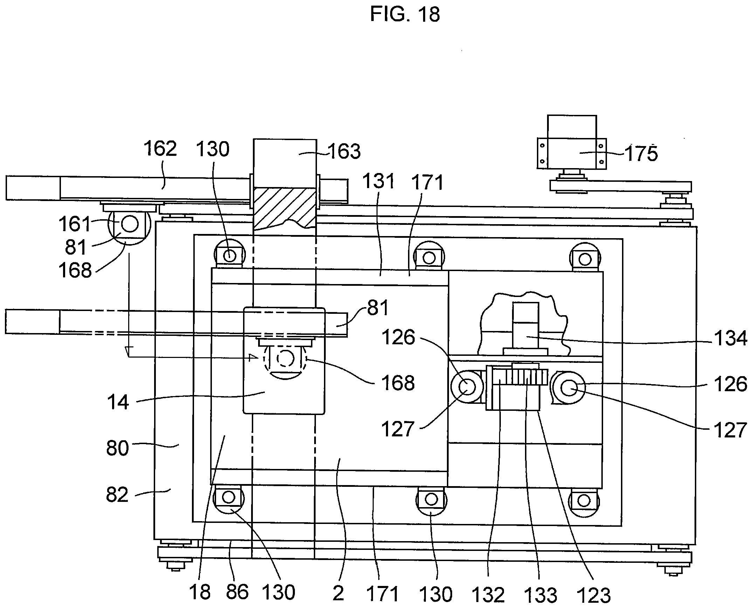

In Figs. 1 to 18, in a glass plate working apparatus 1, a carrying-in position 3, a scribing position 4, a removing position 5, a grinding position 6, and a discharging position 7 are arranged at equal intervals linearly along a transporting direction F, i.e., an X-axis direction, and a transporting device 8 for transporting glass plates 2 is additionally provided.

The transporting device 8 is installed in such a manner as to extend linearly above a carrying-in standby conveyor 75 in the carrying-in position 3, above a scribing worktable 13 in the scribing position 4, above an endless belt 82 in the removing position 5, above a grinding worktable 24 in the grinding position 6, and above a discharge conveyor 35 in the discharging position 7.

In the carrying-in position 3, after the glass plate 2 is positioned on the carrying-in conveyor 75, the glass plate 2 is set on standby for being carried in. In the scribing position 4, a scribe groove 9 constituted by a closed curve is formed on the glass plate 2 by being scribed in the thickness direction of the glass plate 2 in such a manner as to be inclined in a direction toward an inner region 14 inside the closed curve. In the removing position 5, the inner region 14 of the glass plate 2 surrounded by the scribe groove 9 of the closed curve formed in the scribing position 4 is removed upwardly from an outer region 18 of the glass plate 2 outside the scribe groove 9 to form an opening 10 in the glass plate 2. In the grinding position 6, an end face 20 of the opening 10 formed in the removing position 5 is ground. In the discharging position 7, the working finished glass plate 2 in which the end face 20 has been ground is adapted to be discharged to outside the apparatus by the discharge conveyor 35.

The transporting device 8 transports the glass plates 2 while the glass plates 2 are being consecutively replaced between the positions by repeating reciprocating linear movement over each distance between, for instance, the scribing position 4 and the removing position 5, i.e., from the carrying-in position 3 to the scribing position 4, from the scribing position 4 to the removing position 5, from the removing position 5 to the grinding position 6, and from the grinding position 6 to the discharging position 7.

The glass plate working apparatus 1 is provided with an NC device (not shown), and the formation of the scribe groove 9 on the glass plate 2 in the scribing position 4, the removing action in the removing position 5, the grinding of the end face 20 of the opening 10 formed in the glass plate 2 in the grinding position 6, and the reciprocating linear movement in the X-axis direction of the transporting device 8 are effected by this NC device under NC control.

In the scribing position 4, a scribe head 12 having a cutter wheel 11 at a lower end thereof and the scribing worktable 13 for planarly supporting the glass plate 2 are provided. In the grinding position 6, a grinding head 22 having a grinding wheel 21 at a lower end thereof and the grinding worktable 24 which supports a plurality of suction pads 23 for sucking and holding the glass plate 2 are provided. The plurality of suction pads 23 are arranged on an upper surface 69 of a table body 68 of the grinding worktable 24.

The scribe head 12 in the scribing position 4 and the grinding head 22 in the grinding position 6 are mounted on a common X-axis moving base 25 through an angle controlling means 17.

A mount 27 is installed on a pair of upright portal frames 29 erected on a machine base 28 and extends along the X-axis direction above the scribing position 4, the removing position 5, and the grinding position 6. The following are provided on the mount 27: two guide rails 30 laid in parallel in the X-axis direction; the X-axis moving base 25 which is mounted linearly movably in the X-axis direction through slide blocks assembled to the guide rails 30 movably in the X-axis direction; a feed screw 31 disposed between the guide rails 30 and coupled to the X-axis moving base 25 by means of a nut; and an X-axis control motor 32 coupled to one end of the feed screw 31 by means of a toothed belt and a pulley. The X-axis moving base 25 is adapted to undergo X-axis movement by the X-axis control motor 32 which is NC controlled.

In the X-axis moving base 25, a bearing unit 33 is mounted at a position corresponding to the scribing position 4, and a bearing unit 34 is mounted at a position corresponding to the grinding position 6. The bearing unit 33 has a rotating shaft 36 held by a bearing (not shown), and the bearing unit 34 has a rotating shaft 37 held by a bearing (not shown).

The rotating shafts 36 and 37 are assembled with their rotational axes set perpendicularly to an X-Y planar coordinate system, i.e., the upper surface of the glass plate 2, and undergo angularly controlled rotation perpendicularly to the upper surface of the glass plate 2.

The scribe head 12 is mounted at a lower end portion 39 of the rotating shaft 36 via a clamp bracket 42 and a bracket body 43, and an angle controlling motor 40 is coupled to an upper end 38 of the rotating shaft 36 via a pair of mutually meshing spur gears 41.

The grinding head 22 is mounted at a lower end portion 39 of the rotating shaft 37 via a clamp bracket 65, and an angle controlling motor 45 is coupled to an upper end 38 of the rotating shaft 37 via a pair of mutually meshing spur gears 46.

Each of the angle controlling motors 40 and 45 is held by a bracket 47 provided uprightly on the X-axis moving base 25. Upon receiving angularly controlled rotational drive from the angle controlling motors 40 and 45, the respective rotating shafts 36 and 37 cause the scribe head 12 and the grinding head 22 mounted at the respective lower end portions 39 to rotate under angular control about an axis 15 perpendicular to the upper surface of the glass plate 2. Thus, the angle controlling motor 40 and the angle controlling motor 45 are driven under synchronous control to synchronously effect the angularly controlled rotation of the scribe head 12 and the grinding head 22.

The scribe head 12 includes a spline shaft 47 having the cutter wheel 11 at a lower end thereof, a head body 48 for holding the spline shaft 47 reciprocatingly linearly movably without rotating the spline shaft 47, an air cylinder unit 49 which is mounted on an upper portion of the head body 48 and is adapted to pneumatically resiliently press the cutter wheel 11 against the glass plate 2 when scribing is effected on the glass plate 2 by raising and lowering the cutter wheel 11 by the reciprocating linear movement of the spline shaft 47, and a base 50 of the head body 48.

In the formation of the scribe groove 9 on an upper surface 16 which is one surface of the glass plate 2, the scribe head 12 is moved in a state in which the cutter wheel 11 is resiliently pressed against the upper surface 16 as the spline shaft 47 is pushed by the air cylinder unit 49, thereby forming the scribe groove 9 on the upper surface 16.

With the glass plate working apparatus 1, in the scribing position 4, the scribe groove 9 constituted by a closed curve is formed on the upper surface 16 by the cutter wheel 11 in the thickness direction of the glass plate 2 in such a manner as to be inclined in the direction toward the inner region 14 of the scribe groove 9 constituted by the closed curve.

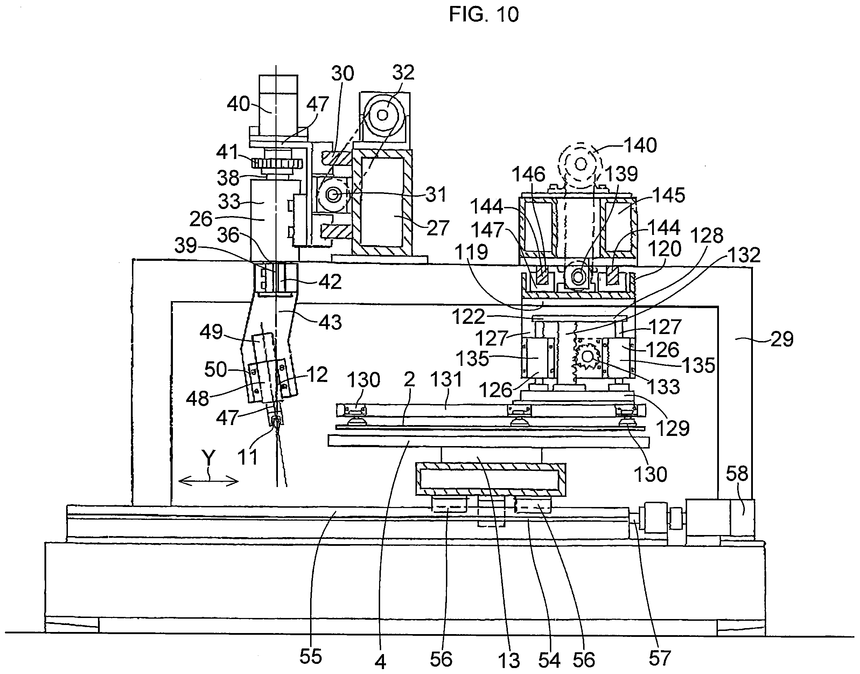

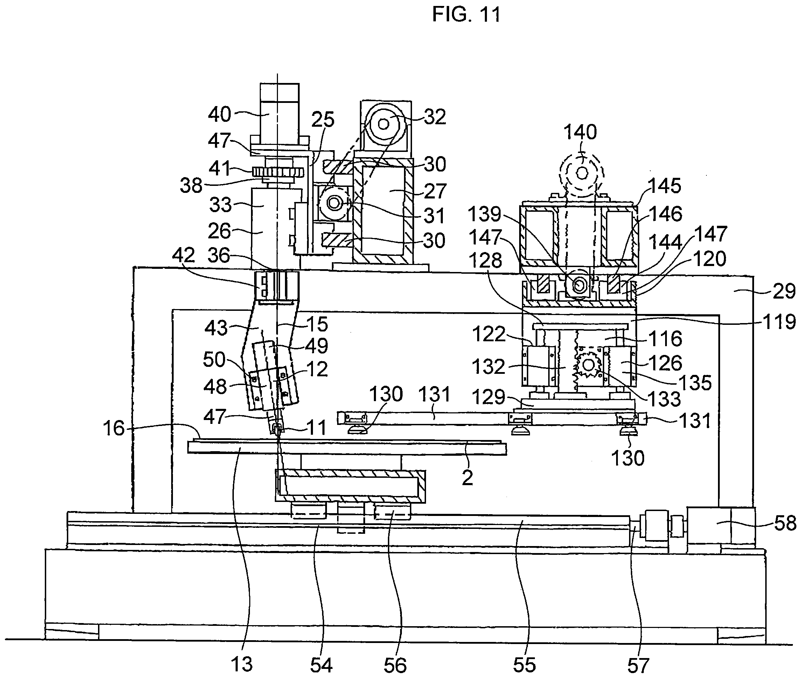

As shown in Fig. 3, in a case where the inclined scribe groove 9 is formed by the cutter wheel 11 whose left and right edge angles are identical with respect to the cutter ridgeline, the scribe head 12 is mounted on the bracket body 43 via the base 50 in such a manner as to be inclined toward the inner region 14 with respect to the upper surface 16 such that the cutter ridgeline of such a cutter wheel 11 is inclined toward the inner region 14 with respect to the upper surface 16 of the glass plate 2, as shown in Figs. 10 and 11.

The scribe head 12 is mounted on the bracket body 43 such that a scribe point 44 of the cutter wheel 11 provided at a lower end thereof is positioned on the rotational axis 15 of the rotating axis 36 during the scribing operation.

In the case where the scribe head 12 is mounted on the bracket body 43 in the posture inclined toward the inner region 14 of the scribe groove 9, the blade edge of the cutter wheel 11 is in a state of being in contact with the upper surface 16 of the glass plate 2 in a posture in which the cutter ridgeline is inclined in the thickness direction of the glass plate 2 toward the inner region 14 of the scribe groove 9.

As such a cutter wheel 11 is rotated and moved along the closed curve, the scribe groove 9 inclined toward the inner region 14 is formed, with the result that a crack 19 is formed in such a manner as to be similarly inclined obliquely toward the inner region 14 over the entire circumference on the basis of the scribe groove 9.

In a case where the diameter of the cutter wheel 11 is 5 mm and the blade edge angle is 154° to 160°, the range of an inclination angle θ of the cutter wheel 11 with respect to the rotational axis 15 is 1° to 10° from the perpendicular, most preferably 6.5°.

The mounting structure of the scribe head 12 onto the bracket body 43 is such that the inclination angle of the cutter wheel 11 with respect to the upper surface 16 of the glass plate 2 can be freely changed and set.

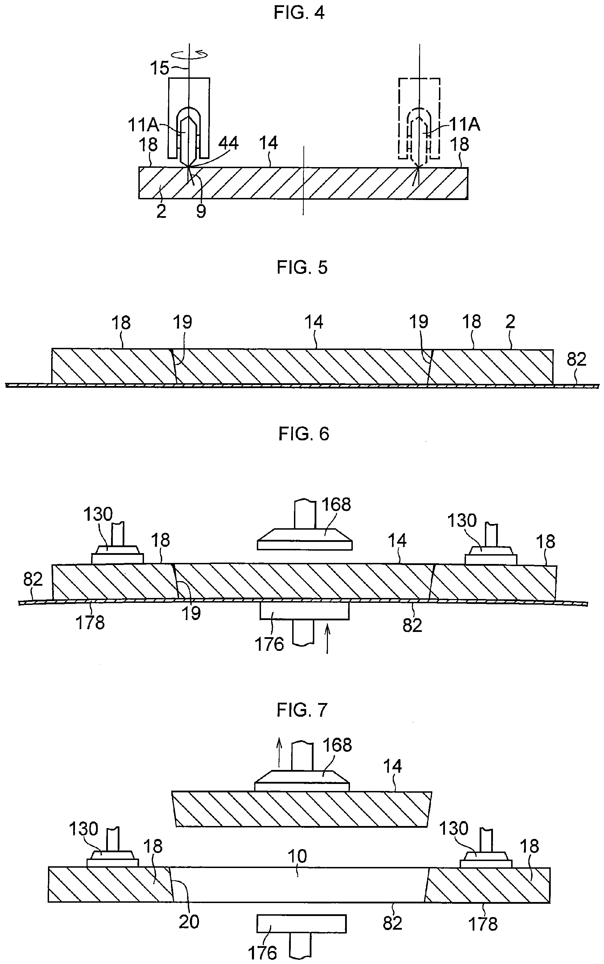

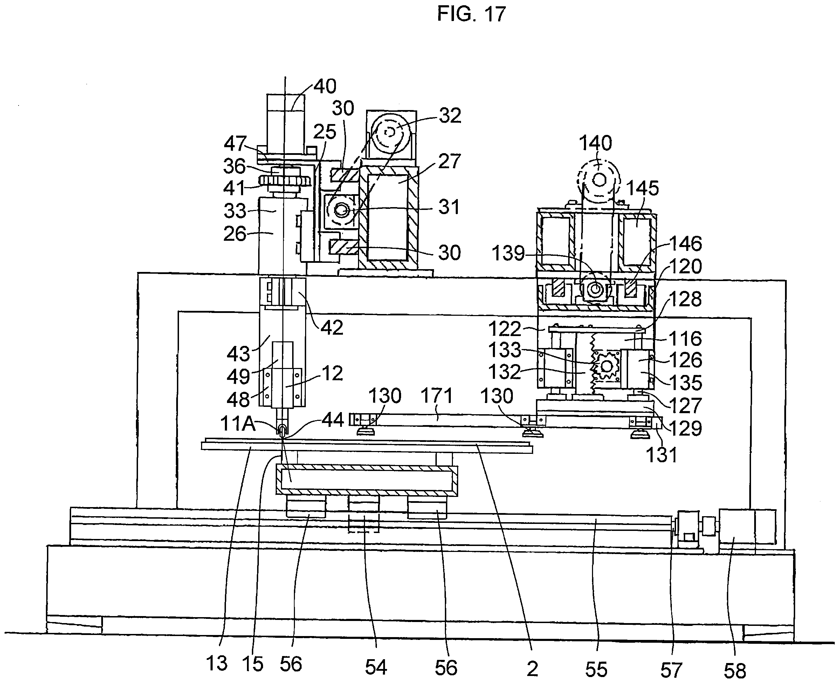

In cases where the inclined scribe groove 9 is formed by a cutter wheel 11A whose left and right edge angles with respect to the cutter ridgeline are different as shown in Fig. 4, the scribe head 12 is mounted on the bracket body 43 perpendicularly to the upper surface 16 by means of the base 50 such that the cutter ridgeline of the cutter wheel 11A is perpendicular to the upper surface 16 of the glass plate 2, and such that the blade surface side with a smaller edge angle is oriented to the inner region 14, as shown in Fig. 17.

The scribing worktable 13 corresponding to the scribe head 12 is mounted on a slide device 54 which is disposed on the upper surface of the machine base 28 along a Y-axis direction perpendicular to the X-axis and parallel to the upper surface 16 of the glass plate 2. The slide device 54 has a pair of guide rails 55 and two pairs of slide blocks 56 respectively assembled to the guide rails 55 movably in the Y-axis direction. The scribing worktable 13 is mounted on the slide blocks 56.

The Y-axis movement of the scribing worktable 13 is effected by a feed screw 57 provided between the guide rails 55 and by a Y-axis control motor 58 connected to the feed screw 57.

The grinding head 22 is mounted on the lower end portion 39 of the rotating shaft 37 in the grinding position 6 by means of the clamp bracket 65. The grinding head 22 includes a spindle motor 60 having the grinding wheel 21, as well as an X-direction slide unit 61 and a Y-direction slide unit 62 for holding the spindle motor 60 and finely adjusting the movement of the spindle motor 60 and, hence, the grinding wheel 21 in the X-axis direction and the Y-axis direction.

The grinding head 22 is mounted on the lower portion 39 of the rotating shaft 37 by means of the clamp bracket 65 in the X-direction slide unit 61.

The grinding head 22 mounted on the lower end portion 39 of the rotating shaft 37 is adapted to be set and adjusted by the X-direction slide unit 61 and the Y-direction slide unit 62 such that the grinding work point of an peripheral end face of the grinding wheel 21 with respect to the end face 20 is positioned on the rotational axis 15 of the rotating shaft 37. The rotating shaft 37 is adapted to be rotated under angular control by the angle controlling motor 45 such that, during the grinding work of the end face 20 by the grinding wheel 21, the center of rotation of the grinding wheel 21 is positioned on a normal to the end face 20 at the grinding work point.

A motor unit 51 is adapted to change over the height position of the grinding head 22 and, hence, the grinding wheel 21 by vertically moving a vertical slide device 52 for setting the vertical position of the grinding head 22, and is adapted to adjust the grinding wheel 21 to the height of the glass plate 2 when performing the grinding work of the end face 20 of the opening 10 by the grinding wheel 21.

The grinding worktable 24 is disposed on the machine base 28 in correspondence with the grinding head 22 to effect X-axis movement, and effects Y-axis movement while planarly sucking and holding the glass plate 2 onto the upper surface 69 through the suction pads 23. This grinding worktable 24 consists of the table body 68 and the plurality of suction pads 23 supported on the upper surface 69 of the table body 68 by being detachably sucked thereonto. The table body 68 is mounted, via slide blocks 73, on a pair of guide rails 70 laid on the upper surface of the machine base 28 along the Y-axis direction, so as to be movable on the upper surface of the machine base 28 in the Y-axis direction. The Y-axis movement of the grinding worktable 24 is effected as a feed screw 71 mounted rotatably on the upper surface of the machine base 28 along the guide rails 70 and coupled to a Y-axis controlling motor 72 is rotatively driven under NC control by the Y-axis controlling motor 72.

In the removing position 5, there are provided a belt conveyor device 80 which includes the flexible endless belt 82 wound therearound and having an upper surface on which the glass plate 2 carried in from the scribing position 4 by the transporting device 8 is placed, as well as an electric motor 175 for causing the endless belt 82 to travel; and an inner region removing device 81 which is moved over the belt conveyor device 80 to the position corresponding to the inner region 14 of the scribe groove 9 of the closed curve formed on the glass plate 2.

The peripheral edge portion of the endless belt 82 which supports the placed glass plate 2 on the upper side is supported by a support 83 disposed on the lower surface of that peripheral edge portion, while an inner region portion of the endless belt 82 surrounded by the support 83 is supported by a support 84. The supports 83 and 84 are fixed to and supported by a conveyor frame 86 installed on the machine base 28.

A fissure propagation device 85 and a pressing/removing device 172, which are moved in an XY coordinate plane in a region corresponding to the region where the scribe groove 9 has been formed on the glass plate 2 placed on the endless belt 82, are provided on the conveyor frame 86 and supported thereon via an XY moving device 173 in such a manner as to be surrounded by the endless belt 82. The fissure propagation device 85 and the pressing/removing device 172 are provided integrally on the XY moving device 173 which is NC controlled, and are adapted to be moved by the XY moving device 173 in the XY coordinate plane.

The XY moving device 173 includes a Y-axis moving means 87 on which the fissure propagation device 85 and the pressing/removing device 172 are integrally mounted, so as to move the fissure propagation device 85 and the pressing/removing device 172 along the Y-axis, as well as an X-axis moving means 88 on which the Y-axis moving means 87 is mounted and which is mounted on the conveyor frame 86, so as to move the Y-axis moving means 87 along the X-axis.

The pressing/removing device 172 includes a raising/lowering unit 174 having an NC servo motor 177 and a raising/lowering shaft 175 coupled to the NC servo motor 177, as well as a pressing plate 176 fixed to an upper end of the raising/lowering shaft 175, and is adapted to raise and lower the pressing plate 176 by means of the raising/lowering shaft 175 as the NC servo motor 177 is driven under NC control.

The fissure propagation device 85 includes a receiving surface body 185 having a supporting surface 181 which is an upper surface at the same height as or slightly lower than the upper surface of the support 84; a lift 180 whose upper surface is raised by 1 to 3 mm or thereabouts with respect to the supporting surface 181 of the receiving surface body 185; and an air cylinder unit 186 for raising or lowering the lift 180.

The inner region removing device 81 includes a sucking and raising/lowering unit 161 having a suction pad 168 at a lower end thereof and having an air cylinder unit 190 for raising or lowering the suction pad 168; a Y-direction moving means 162 for moving the sucking and raising/lowering unit 161 in the Y direction by NC control; and an X-direction moving means 163 mounted on a lower surface of the mount 27 through a bracket 89 to move the Y-direction moving means 162 in the X direction by NC control.

In the inner region removing device 81, when the glass plate 2 is carried from the scribing position 4 onto and placed on the upper surface of the endless belt 82 of the belt conveyor device 80 in the removing position 5, a glass plate lifting device 117 is returned to the removing position 5, a plurality of suction pads 130 of the glass plate lifting device 117 are positioned above the outer region 18 of the glass plate 2 outside the scribe groove 9, and the suction pads 168 of the sucking and raising/lowering unit 161 of the inner region removing device 81 concurrently move to above the center of the inner region 14 of the scribe groove 9 on the glass plate 2.

At this time, the glass plate 2 is supported by the supports 83 and 84 and the receiving surface body 185 through the endless belt 82, and the glass plate 2 in the region where the scribe groove 9 has been formed is supported through the endless belt 82 by the fissure propagation device 85 and the pressing/removing device 172 which are placed under the endless belt 82. In this state, the suction pads 130 of the transporting device 8 are lowered, and the outer region 18 of the glass plate 2 outside the scribe groove 9 is pressed downwardly by these lowered suction pads 130. Subsequently, in a state in which the upper surface of the lift 180 is raised by 1 to 2 mm or thereabouts with respect to the supporting surface 181 by the fissure propagation device 85, the scribe groove 9 is pushed upwardly from below by the lift 180 via the endless belt 82 and is moved along the scribe groove 9, to thereby promote the progress of the crack 19 located below and continuing from the scribe groove 9. Upon completion of the promotion of progress of the crack 19 in the entire region of the scribe groove 9, the lift 180 is lowered.

Next, the pressing/removing device 172 is moved to the inner side of the inner region 14 of the scribe groove 9, causes the pressing plate 176 to move to the center of the inner region 14, and drives the NC servo motor 177 under NC control to cause the pressing plate 176 to repeatedly effect raising and lowering by very small degrees in such a manner as to bend the glass plate 2 upwardly in a convex surface, to thereby allow the inclined crack 19 continuing from the scribe groove 9 to be formed by proceeding to a lower surface 178, i.e., an opposite surface opposing the upper surface 16 of the glass plate 2. The pressing plate 176 then presses and separates the inner region 14 of the scribe groove 9 upwardly, and the suction pad 168 of the inner region removing device 81 is concurrently lowered, and the separated inner region 14 of the glass plate 2 is sucked from above by the lowered suction pad 168. After the sucking, the suction pad 168 is raised and moved in the XY coordinate plane, and places the sucked inner region 14 of the glass plate 2 onto an unillustrated scrap belt conveyor or the like in the outside and discard it.

After the removal of the inner region 14 of the glass plate 2, the plurality of suction pads 130 of the transporting device 8 suck and raise the outer region 18 of the glass plate 2 (for produce use) and transports it to the ensuing grinding position 6.

The transporting device 8 has a reciprocally moving base 120 which repeats reciprocating movement, which is parallel to the X-axis above the carrying-in position 3, the scribing position 4, the removing position 5, and the grinding position 6, by a transport control motor 140. The following are provided on the reciprocally moving base 120: a glass plate lifting device 115 in correspondence with the carrying-in position 3, a glass plate lifting device 116 in correspondence with the scribing position 4, the glass plate lifting device 117 in correspondence with the removing position 5, and a glass plate lifting device 118 in correspondence with the grinding position 6. These glass plate lifting devices 115, 116, 117, and 118 are adapted to undergo reciprocating movement integrally with the reciprocating movement of the reciprocally moving base 120 parallel to the X-axis direction.

The glass plate lifting devices 115, 116, 117, and 118 are respectively provided with lifting devices 121, 122, 123, and 124. Each of the lifting devices 121, 122, 123, and 124 includes a pair of slide devices 126 disposed on a respective bracket 119; a pair of connectors 128 and 129 for vertically connecting respective slide shafts 127 of the pair of slide devices 126; a U-shaped support frame 131 mounted on the lower surface of the connector 129 and having the plurality of suction pads 130 on advancing direction side surfaces thereof; a rack 132 provided uprightly on the lower connector 129; a pinion gear 133 meshing with the rack 132; and an NC controlled motor 134 which is mounted on the bracket 120, and to an output shaft of which the pinion gear 133 is mounted, to rotatively drive the pinion gear 133 through the output shaft.

Each of the slide devices 126 on both sides has a slide bush 135 mounted on the bracket 120 and the slide shaft 127 which vertically slides inside the slide bush 135.

Each of the lifting devices 121, 122, 123, and 124 is so arranged that as the pinion gear 133 is rotated by the NC controlled motor 134, the rack 132 meshing with the pinion gear 133 is raised or lowered so as to raise or lower the connector 129 with the rack 132 mounted thereon, the U-shaped frame 131 mounted on the connector 129, and, hence, the plurality of suction pads 130. As the U-shaped frame 131 is lowered, the plurality of suction pads 130 are brought into contact with the upper surface of the glass plate 2 and suck and hold the glass plate 2, while as the U-shaped frame 131 is raised, the glass plate 2 sucked and held by the plurality of suction pads 130 is lifted.

The U-shaped frame 131 has a pair of frames 171 with the opening 10 interposed therebetween in the Y-axis direction so that when the suction pads 130 in their lowering suck and press the glass plate 2, the suction pads 130 are positioned in the outer region 18 in the Y-axis direction. The suction pads 130 are mounted on the respective frames 171, and the respective frames 171 are mounted on the connector 129.

On a lower surface of a mount 145 installed on the pair of frames 29 in parallel with the mount 27, the reciprocally moving base 120 is mounted on a pair of slide devices 144 installed in parallel in the X-axis direction. Each slide device 144 includes a pair of rail bodies 146 mounted in parallel and two pairs of slide blocks 147 assembled to the rail body 146 movably in the X-axis direction, the reciprocally moving base 120 being mounted on the slide blocks 147.

The reciprocally moving base 120 is reciprocated in the X-axis direction under NC control by a feed screw 139 disposed between the pair of rail bodies 146 and a transport control motor 140 coupled to the feed screw 139.

### DESCRIPTION OF REFERENCE NUMERALS

- 1:: working apparatus
- 2:: glass plate
- 3:: carrying-in position
- 4:: scribing position
- 5:: removing position
- 6:: grinding position
- 7:: discharging position
- 8:: transporting device
- 81:: inner region removing device
- 85:: fissure propagation device
- 172:: pressing/removing device

## Claims

1. A glass plate working method comprising the steps of:
forming on one surface of a glass plate a scribe groove constituted by a closed curve with a cutter wheel, the scribe groove being directed in a thickness direction of the glass plate in such a manner as to be inclined toward an inner region of the closed curve; and
lifting an inner region of the glass plate inside the closed curve from another surface of the glass plate in a state in which an outer region of the glass plate outside the closed curve is pressed from one surface of the glass plate with the scribe groove formed thereon, to bend the glass plate in a convex shape toward a side of the one surface so as to cause the scribe groove to proceed toward the other surface facing to the one surface of the glass plate, and removing the inner region of the glass plate inside the closed curve from the outer region of the glass plate outside the closed curve.

2. The glass plate working method according to claim 1, wherein the scribe groove is caused to reach the other surface by allowing the scribe groove to proceed by bending the glass plate in a convex shape.

3. The glass plate working method according to claim 1 or 2, wherein the lifting of the glass plate is effected by NC control.

4. A glass plate working apparatus comprising:
a scribing position for forming on one surface of a glass plate a scribe groove constituted by a closed curve with a cutter wheel, the scribe groove being directed in a thickness direction of the glass plate in such a manner as to be inclined toward an inner region of the closed curve; and
a removing position for lifting an inner region of the glass plate inside the closed curve from another surface of the glass plate in a state in which an outer region of the glass plate outside the closed curve is pressed from one surface of the glass plate with the scribe groove formed thereon, to bend the glass plate in a convex shape toward a side of the one surface so as to cause the scribe groove to proceed toward the other surface facing to the one surface of the glass plate, and removing the inner region of the glass plate inside the closed curve from the outer region of the glass plate outside the closed curve.

5. The glass plate working apparatus according to claim 4, wherein, in the removing position, the scribe groove is caused to reach the other surface by allowing the scribe groove to proceed by bending the glass plate in a convex shape.

6. The glass plate working apparatus according to claim 4 or 5, wherein the lifting of the glass plate is effected by NC control.
